# EUROPEAN PATENT SPECIFICATION

(11) **EP 3 637 900 B1**
(45) Date of publication and mention of the grant of the patent: **19.01.2022**
(21) Application number: 17927077.2
(22) Date of filing: 29.09.2017
(51) Int. Cl.: H04W 72/04, H04L 5/00

(54) **WIRELESS COMMUNICATION METHOD AND DEVICE**
DRAHTLOSKOMMUNIKATIONSVERFAHREN UND -VORRICHTUNG
PROCÉDÉ ET DISPOSITIF DE COMMUNICATION SANS FIL

(43) Date of publication of application: 15.04.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/104577
(87) International publication number: WO 2019/061350

(56) References cited:
- WO-A1-2017/028056
- CN-A- 101 841 913
- CN-A- 102 244 931
- CN-A- 102 265 697
- US-A1- 2012 218 935
- US-A1- 2014 126 490
- LG ELECTRONICS: "Remaining issues on resource sharing between PDCCH and PDSCH", 3GPP DRAFT; R1-1715872 REMAINING ISSUES ON RESOURCE SHARING BETWEEN PDCCH AND PDSCH_VF, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG1, no. Nagoya, Japan; 20170918 - 20170921 17 September 2017 (2017-09-17), XP051339332, Retrieved from the Internet: URL:http://www.3gpp.org/ftp/Meetings_3GPP_ SYNC/RAN1/Docs/ [retrieved on 2017-09-17]
- NOKIA ET AL: "Resource sharing between PDCCH and PDSCH in NR", 3GPP DRAFT; R1-1715750_RESOURCE_SHARING_PDCCHANDPDSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 17 September 2017 (2017-09-17), XP051339212, Retrieved from the Internet: URL:http://www.3gpp.org/ftp/Meetings_3GPP_ SYNC/RAN1/Docs/ [retrieved on 2017-09-17]
- WILUS INC: "PDSCH/PDCCH resource sharing for NR", 3GPP DRAFT; R1-1716630, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 17 September 2017 (2017-09-17), XP051340080, Retrieved from the Internet: URL:http://www.3gpp.org/ftp/Meetings_3GPP_ SYNC/RAN1/Docs/ [retrieved on 2017-09-17]

## Description

The disclosure relates to the field of communications, and more particularly to a method and a terminal device for wireless communication.

### BACKGROUND

In a Long Term Evolution (LTE) system, a network side may configure a common search space and a user-specific search space for a terminal, and the terminal may search for, in the common search space and the user-specific search space, a Physical Downlink Control Channel (PDCCH) transmitted by the network side. For a channel such as a Physical Uplink Shared Channel (PUSCH), a Physical Uplink Control Channel (PUCCH) or a Physical Downlink Shared Channel (PDSCH), a network device may perform resource scheduling on the terminal to implement data transmission with the terminal.

In a 5th-Generation (5G) system, the requirement on communication performance is high, and configuration and usage of resources are more flexible.

Therefore, how to improve communication performance in the usage of configuration resources is an urgent problem to be solved.

Background may be found at least in LG ELECTRONICS: "Remaining issues on resource sharing between PDCCH and PDSCH", 3GPP DRAFT; R1-1715872, September 17, 2017, and US 2014/126490 A1.

### SUMMARY

The present invention is defined by the independent claims. Advantageous features are set out in the dependent claims. Embodiments of the disclosure provide a method and device for wireless communication, which may improve communication performance in the usage of configuration resources.

### BRIEF DESCRIPTION OF DRAWINGS

In order to describe the technical solutions of the embodiments of the disclosure more clearly, the drawings used in descriptions about the embodiments or a related art will be simply introduced below. It is apparent that the drawings described below are only some embodiments of the disclosure. Other drawings may further be obtained by those of ordinary skill in the art according to these drawings without creative work.
FIG. 1 is a diagram of a system for wireless communication according to an embodiment of the disclosure
FIG. 2 is a flowchart of a method for wireless communication according to an embodiment of the disclosure
FIG. 3 is a flowchart of a method for wireless communication not being part of the invention.
FIG. 4 is a block diagram of a device for wireless communication according to an embodiment of the disclosure
FIG. 5 is a block diagram of a device for wireless communication not being part of the invention.
FIG. 6 is a block diagram of a system chip not being part of the invention.
FIG. 7 is a block diagram of a communication device not being part of the invention.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

The technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), an LTE system, an LTE Frequency Division Duplex (FDD) system, LTE Time Division Duplex (TDD) system, a Universal Mobile Telecommunication System (UMTS), a Worldwide Interoperability for Microwave Access (WiMAX) communication system or a future 5G system.

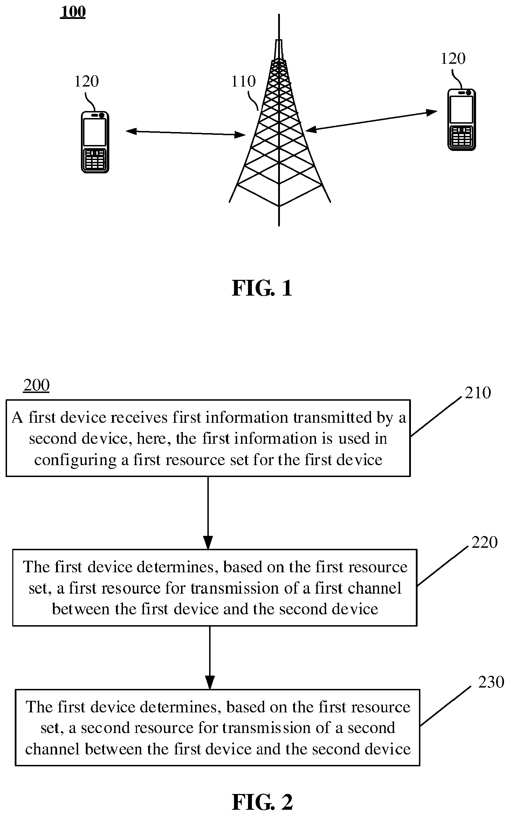

FIG. 1 illustrates a system 100 for wireless communication to which the embodiments of the disclosure are applied. The system 100 for wireless communication may include a network device 110. The network device 110 may be a device which communicates with a terminal device. The network device 110 may provide communication coverage for a specific geographical region and may communicate with a terminal device (for example, User Equipment (UE)) in the coverage. The network device 110 may be a Base Transceiver Station (BTS) in the GSM or the CDMA system, a NodeB (NB) in the WCDMA system, an Evolutional Node B (eNB or eNodeB) in the LTE system or a wireless controller in a Cloud Radio Access Network (CRAN). Or the network device may be a relay station, an access point, a vehicle-mounted device, a wearable device, a network-side device in a future 5G network, a network device in a future evolved Public Land Mobile Network (PLMN) or the like.

The system 100 for wireless communication further includes at least one terminal device 120 within the coverage of the network device 110. The terminal device 120 may be mobile or fixed. The terminal device 120 may be an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, other processing devices connected to a wireless modem, a vehicle-mounted device, a wearable device, a terminal device in the future 5G network, a terminal device in the future evolved PLMN or the like.

In an embodiment, Device to Device (D2D) communication may be performed between the terminal devices 120.

In an embodiment, the 5G system or network may also be called a New Radio (NR) system or network.

One network device and two terminal devices are exemplarily illustrated in FIG. 1. The system 100 for wireless communication may include multiple network devices and another number of terminal devices may be included in coverage of each network device. There are no limits made thereto in the embodiments of the disclosure.

In an embodiment, the system 100 for wireless communication may further include other network entities such as a network controller and a mobility management entity. There are no limits made thereto in the embodiments of the disclosure.

Terms "system" and "network" in the disclosure may usually be exchanged in the disclosure. In the disclosure, term "and/or" is only an association relationship describing associated objects and represents that three relationships may exist. For example, A and/or B may represent three conditions. That is, independent existence of A, existence of both A and B and independent existence of B. In addition, character "/" in the disclosure usually represents that previous and next associated objects form an "or" relationship.

FIG. 2 is a flowchart of a method 200 for wireless communication according to an embodiment of the disclosure. The method 200 includes at least part of contents in the following contents.

In 210, a first device receives first information transmitted by a second device, here, the first information is used in configuring a first resource set for the first device.

In 220, the first device determines, based on the first resource set, a first resource for transmission of a first channel between the first device and the second device.

In an embodiment, the information transmitted by the second device to the first device may be carried in Radio Resource Control (RRC) signaling, control information, system information or a Media Access Control Control Element (MAC CE).

The first device may select, from the first resource set, a resource as the first resource for the transmission of the first channel. Or the first device may obtain another resource set based on the resource set and select, from another resource set, a resource as the first resource for the transmission of the first channel.

In 230, the first device determines, based on the first resource set, a second resource for transmission of a second channel between the first device and the second device.

The first device may select, from the first resource set, a resource as the second resource for the transmission of the second channel. Or the first device may obtain another resource set based on the resource set and select, from another resource set, a resource as the second resource for the transmission of the second channel.

Here, when the first device selects, from the first resource set, the first resource for the transmission of the first channel, the first device may determine a second resource set based on the first resource set and determine, from the second resource set, the second resource for the transmission of the second channel. In such case, the first resource set may be called a resource set which is configured by the second device for the first device and which is for the first channel.

Or the first device determines a third resource set based on the first resource set and determines, from the third resource set, the first resource for the transmission of the first channel, and the first device determines the second resource set based on the first resource set and determines, from the second resource set, the second resource for the transmission of the second channel.

The resource set mentioned in the embodiment of the disclosure may include at least one of: a time-domain resource, a frequency-domain resource, a space-domain resource, or a code-domain resource.

The resource set mentioned in the embodiment of the disclosure may include multiple resources with a specific resource granularity, and each resource may have a resource index.

Here, the first resource selected by the first device may include at least one resource, and the second resource selected by the first device may include at least one resource.

In an embodiment, the first device is a terminal device, and the second device is a network device. The embodiment of the disclosure is not limited thereto. For example, both the first device and the second device may be terminal devices.

In an embodiment, the first channel and the second channel are the same type of channel.

Here, the type may be divided according to uplink and downlink. For example, the first channel and the second channel are uplink channels, or the first channel and the second channel are downlink channels.

Or the type is divided according to uplink and downlink and in combination with a type of information transmitted through a channel. The first channel and the second channel are PUSCHs, or the first channel and the second channel are PUCCHs, or the first channel and the second channel are PDSCHs.

Or the type is divided according to a type of information transmitted through a channel. For example, the first channel and the second channel are data channels, or the first channel and the second channel are control channels.

In an embodiment of the disclosure, the first channel is different from the second channel in terms of at least one of: a bandwidth part where the channel is located, a carrier where the channel is located, a cell where the channel is located, a duplex direction used for the channel, or a numerology used for the channel.

In an embodiment, the numerology used for the first channel is different from the numerology used for the second channel includes at least one of the following: a subcarrier spacing used for the first channel is different from a subcarrier spacing used for the second channel, or a cyclic prefix used for the first channel is different from a cyclic prefix used for the second channel.

For convenient understanding, how the first device determines, based on the first resource set, the second resource for the transmission of the second channel will be introduced below.

In an implementation mode, the first device may determine, from the first resource set, the second resource for the transmission of the second channel.

The first resource set may include multiple resources, each of the multiple resources may have its own index, and the first device may select, from the resource set, one or more resources for the transmission of the second channel.

Here, the second device may notify the first device of an index of a resource to be selected. For example, the second device notifies, through information carried in a PDCCH, the terminal device of an index of a resource for transmission of a PUCCH. Or the second device may not notify the terminal device of an index of a resource to be selected, but only transmit a triggering instruction that instructs the first device to transmit the second channel or receive the second channel, and the first device may select (for example, randomly selects), after receiving the triggering instruction, a resource from the resource set. Or the second device may transmit a downlink data channel to the first device, and the first device may select a resource for transmitting a feedback for the data channel.

In an embodiment, when the first device on its own selects resource(s) from the first resource set, the number of selected resources may be determined according to a volume of data currently to be transmitted.

In an implementation mode, the first device determines a second resource set based on the first resource set, and the first device determines, from the second resource set, the second resource for the transmission of the second channel between the first device and the second device.

The first device obtains the second resource set based on the first resource set, here, the second resource set may include multiple resources, each of the multiple resources has its own index, and the first device may select, from the second resource set, one or more resources for the transmission of the second channel.

Here, the second device may transmit second information to the first device, and the first device may select one or more resources from the second resource set according to the second information.

Here, the second information may indicate an index of a resource to be selected by the first device. For example, the second device notifies, through information carried in the PDCCH, the first device of information about a resource for transmission of the PUCCH. Or the second information is only a triggering instruction that triggers a terminal to select a resource from the second resource set. Or the second information may be carried in a downlink data channel, and the first device may select a resource for transmitting feedback information for the second information. Or the second information contains an index of a resource in the first resource set rather than an index of a resource to be selected by the first device from the second resource set, and the first device may deduce, according to a manner in which the second resource set is determined based on the first resource set, a resource index corresponding to the index contained in the second information, in the second resource set.

In an embodiment, when the first device on its own selects resource(s) from the first resource set, the number of selected resources may be determined according to a volume of data presently to be transmitted.

In an embodiment, a granularity of resources in the second resource set may be equal to a granularity of resources in the first resource set. In such case, if resources in the first resource set partially overlap with resources in the second resource set, indexes of overlapping resources may be retained, or indexes of all resources in the second resource set may be rearranged.

Or a granularity of resources in the second resource set may be not equal to a granularity of resources in the first resource set. For example, a resource with one granularity in the second resource set may be equal to resources with two granularities in the first resource set. The first device may reset new indexes for the resources in the second resource set, so that each of the resources in the second resource set has a unique resource index distinguished from other resources in the second resource set.

Several manners for determining the second resource set will be introduced below.

In an implementation mode not being part of the invention, the first device determines a subset of the first resource set as the second resource set.

The first device may select a part of resources from the first resource set to form the second resource set.

Here, a granularity of resources in the second resource set may be equal to a granularity of resources in the first resource set, and in such case, the first device may determine indexes of resources to be selected and form the resources with these indexes into the second resource set. Indexes in the second resource set can still be the indexes in the first resource set. For example, if the indexes of the resources selected from the first resource set are 1, 3 and 5, the indexes of the resources in the second resource set may be 1, 3 and 5. Or resource indexes may be reset for the resources in the second resource set. For example, the indexes of the resources in the second resource set may be 1, 2 and 3.

Or a granularity of resources in the second resource set may be not equal to a granularity of resources in the first resource set. For example, resources with one granularity in the second resource set may be equal to resources with two granularities in the first resource set. In such case, the first device may determine indexes of resources to be selected from the first resource set and merge these resources in pairs to meet the granularity of resources in the second resource set. The first device may reset new indexes for the resources in the second resource set, so that each of the resources in the second resource set has a unique resource index distinguished from the other resources in the second resource set.

In an embodiment not being part of the invention, the second device may transmit third information to the first device, here, the third information is used to indicate the subset forming the second resource set. Therefore, the first device may determine the subset of the first resource set based on the third information and determine the subset as the second resource set. Furthermore, the second device may also instruct the first device how to set the indexes for the resources in the second resource set after the second resource set is formed.

Or a rule on how to select, from the first resource set, the subset used to form the second resource set may also be preset in the first device. Furthermore, a manner for setting the indexes of the resources in the second resource set may also be preset in the first device.

In another implementation mode, a resource is added into the first resource set to form the second resource set.

The first device may add a new resource into the resource set to form the second resource set.

Here, a granularity of resources in the second resource set may be equal to a granularity of resources in the first resource set. In such case, the first device may add, into the first resource set, a resource with the same granularity as the resources in the first resource set. Here, the first device may keep, in the second resource set, the original indexes of the resources in the first resource set unchanged and add a new index for the new resource, or the first device may reset new indexes for the resources in the second resource set.

Or a granularity of resources in the second resource set may be unequal to a granularity of resources in the first resource set, and in such case, the second device may reset a respective new index for each of the resources in the second resource set.

In an embodiment, the second device may transmit fourth information to the first device, here, the fourth information is used to indicate a resource to be added (i.e., new resource). Therefore, the first device may determine the resource to be added based on the fourth information and add the new resource into the first resource set to form the second resource set. Furthermore, the second device may also instruct the first device how to set the indexes for the resources in the second resource set after the second resource set is formed.

Or a rule on how to add a resource into the first resource set to form the second resource set may also be preset in the first device. Furthermore, a manner for setting the indexes of the resources in the second resource set may also be preset in the first device.

In another implementation mode, at least one of the number of resources in the first resource set or a granularity of resources in the first resource set is extended or reduced in at least one of a time domain or a frequency domain to form the second resource set.

The first device extends or reduces the number of resources in the first resource set in the frequency domain or the time domain to form the second resource set. For example, the number of time-domain resources in the first resource set remains unchanged and the number of resources is increased or decreased on the basis of the original number of frequency-domain resources; or the number of frequency-domain resources in the first resource set remains unchanged and the number of resources is increased or decreased on the basis of the original number of time-domain resources in the first resource set.

Here, the second resource set obtained by extension of the number of resources may include the original resources in the first resource set, or may include a part of the original resources in the first resource set or include no resources in the first resource set. Or the second resource set obtained by reduction of the number of resources may be a subset of the first resource set, or may have partial intersection with the first resource set, or even have no intersection with the first resource set.

The first device extends or reduces the granularity of resources in the first resource set in the frequency domain or the time domain to form the second resource set.

Here, a size of the granularity of resources in the first resource set remains unchanged in the time-domain, and frequency-domain resources are extended or reduced. In an aspect, if the granularity of resources in the first resource set occupies M symbols in the time domain and occupies N subcarriers in the frequency domain, the granularity of resources in the second resource set occupies M symbols in the time domain and occupies N+b or aN subcarriers in the frequency domain. Or a size of the granularity of resources in the first resource set remains unchanged in the frequency-domain, and the size in time-domain is extended or reduced. In an aspect, if the granularity of resources the first resource set occupies M symbols in the time domain and occupies N subcarriers in the frequency domain, the granularity of resources in the second resource set occupies M+c or dM symbols in the time domain and occupies N subcarriers in the frequency domain.

Of course, extension or reduction is also performed in both the time domain and the frequency domain; or extension is performed in the time domain and reduction is performed in the frequency domain; or extension is performed in the frequency domain and reduction is performed in the time domain.

The resource granularity (i.e., the granularity of resources) is extended or reduced may include that a width of a subcarrier or a length of a symbol in resources forming the resource granularity is extended or reduced. For example, the number of symbols or subcarriers in each resource remains unchanged, but a length of a symbol or a width of a subcarrier is changed.

In an embodiment, positions of resources in the first resource set are the same as positions of resources in the second resource set; or the number of resources in the first resource set is the same as the number of resources in the second resource set; or positions of resources in the first resource set are the same as positions of resources in the second resource set and the number of resources in the first resource set is the same as the number of resources in the second resource set. The first resource set is different from the second resource set in terms of resource granularity. Or the first resource set is different from the second resource set in terms of not only resource granularity but also at least one of positions of resources or the number of resources.

In an embodiment, the second device may transmit fifth information to the first device, here, the fifth information is used to indicate an amplitude of extension or reduction for at least one of the number of resources in the first resource set or the granularity of resources in the first resource set. Furthermore, the second device may also instruct the first device how to set the indexes for the resources in the second resource set after the second resource set is formed.

Or the rule on how to select, from the first resource set, the subset for forming the second resource set may also be preset in the first device. Furthermore, the manner for setting the indexes of the resources in the second resource set may also be preset in the first device.

In an embodiment, the first device may determine, based on a frequency-domain magnitude relationship between a carrier where the first channel is located and a carrier where the second channel is located, an amplitude of extension or reduction for the at least one of the number of resources or the granularity of resources; or the first device may determine, based on a frequency-domain magnitude relationship between a bandwidth part where the first channel is located and a bandwidth part where the second channel is located, an amplitude of extension or reduction for the at least one of the number of resources or the granularity of resources.

The amplitude mentioned in the embodiment of the disclosure may be an absolute value, or may be a proportion.

In another implementation mode, the first resource set is offset in at least one of a time domain or a frequency domain to form the second resource set.

In the implementation mode, the number of resources in the first resource set may be equal to the number of resources in the second resource set. For example, if a time-domain starting position of the resources in the first resource set is a slot 1, an ending position is a slot 10 and an offset is two slots, a time-domain starting position of the resources in the second resource set is a slot 3 and an ending position is 12.

Or the number of resources in the first resource set may be unequal to the number of resources in the second resource set. For example, if a time-domain starting position of the resources in the first resource set is a slot 1, an ending position is a slot 10 and an offset is two slots, a time-domain starting position of the resources in the second resource set is a slot 3 and an ending position is a slot 10.

In an embodiment, the first device receives sixth information from the second device, here, the sixth information is used to indicate an offset. Furthermore, the second device may also instruct the first device how to set the indexes for the resources in the second resource set after the second resource set is formed.

Or a rule on how to perform an offset on the basis of the first resource set to form the second resource set may also be preset in the first device. Furthermore, the manner for setting the indexes of the resources in the second resource set may also be preset in the first device.

Although each of the several manners for determining the second resource set based on the first resource set are independently introduced above, these manners do not exist independently and these manners may be combined for use under some circumstances. For example, the second resource set may be formed by performing an extension or reduction on the granularity of resources in the first resource set and by performing an offset on the first resource set.

How to determine, based on the first resource set, the second resource for the transmission of the second channel has been introduced above, and how to determine, based on the first resource set, the resource for the transmission of the first channel will be introduced below.

In an implementation mode, the first device determines, from the first resource set, the first resource for the transmission of the first channel.

In an embodiment, the first device receives seventh information transmitted by the second device, and the first device determines the first resource from the first resource set according to the seventh information.

In an implementation mode, the first device determines a third resource set based on the first resource set, and the first device determines, from the third resource set, the first resource for the transmission of the first channel between the first device and the second device.

In an embodiment, the first device receives eighth information transmitted by the second device, and the first device determines the first resource from the third resource set according to the eighth information.

In an embodiment, the first device determines the third resource set based on the first resource set includes the following operation.

The third resource set is determined based on the first resource set in one of the following manners that: a subset of the first resource set is determined as the third resource set; a resource is added into the first resource set to form the third resource set; the number of resources or a granularity of resources in the first resource set is extended or reduced in at least one of a time domain or a frequency domain to form the third resource set; or the first resource set is offset in a time domain or a frequency domain to form the third resource set.

In an embodiment, the manner in which the third resource set is determined based on the first resource set is that the subset of the first resource set is determined as the third resource set; and the first device receives ninth information from the second device, here, the ninth information is used to indicate the subset.

In an embodiment, the manner in which the third resource set is determined based on the first resource set is that the resource is added into the first resource set to form the third resource set, and the first device receives tenth information from the second device, here, the tenth information is used to indicate a resource to be added.

In an embodiment, the manner in which the third resource set is determined based on the first resource set is that the number of resources or the granularity of resources in the first resource set is extended or reduced in the at least one of the time domain or the frequency domain to form the third resource set, and the first device receives eleventh information from the second device, here, the eleventh information is used to indicate an amplitude of extension or reduction.

In an embodiment, the manner in which the third resource set is determined based on the first resource set is that the number of resources or the granularity of resources in the first resource set is extended or reduced in the at least one of the time domain or the frequency domain to form the third resource set, and an amplitude of extension or reduction is determined based on a frequency-domain magnitude relationship between a carrier where the first channel is located and a carrier where the second channel is located or based on a frequency-domain magnitude relationship between a bandwidth part where the first channel is located and a bandwidth part where the second channel is located.

In an embodiment, the manner in which the third resource set is determined based on the first resource set is that the first resource set is offset in the time domain or the frequency domain to form the third resource set, and the first device receives twelfth information from the second device, here, the twelfth information is used to indicate an offset.

In an embodiment, the manner in which the third resource set is determined based on the first resource set is preset in the first device.

The implementation of some details about determination of the resource for transmission of the first channel based on the first resource set may refer to the implementation of determination of the resource for transmission of the second channel based on the first resource set and, for simplicity, elaborations are omitted herein.

Accordingly, in the embodiment of the disclosure, the second device configures the first resource set for the first device, the first device may transmit the first channel based on the first resource set, and the first device may also transmit the second channel based on the second resource set. Therefore, the problem of high signaling overhead caused by the case where the first device separately configure, for the second device, a resource set for the first channel and a resource set for the second channel may be solved, flexibility in configuration and use of resources may be achieved, and an association between transmission of the first channel and transmission of the second channel may be achieved.

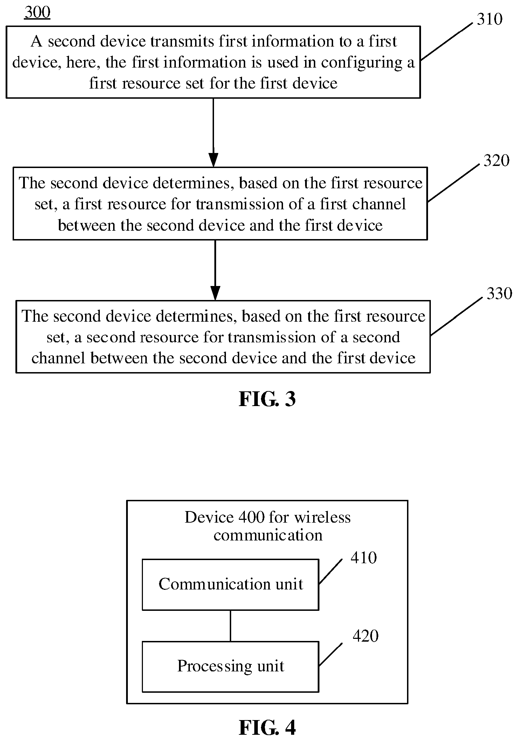

FIG. 3 is a flowchart of a method 300 for wireless communication not being part of the invention. The method 300 includes at least part of contents in the following contents.

In 310, a second device transmits first information to a first device, here, the first information is used in configuring a first resource set for the first device.

In 320, the second device determines, based on the first resource set, a first resource for transmission of a first channel between the second device and the first device.

In 330, the second device determines, based on the first resource set, a second resource for transmission of a second channel between the second device and the first device.

In an embodiment, the first channel is different from the second channel in terms of at least one of: a bandwidth part where the channel is located, a carrier where the channel is located, a cell where the channel is located, a duplex direction adopted for the channel, or a numerology adopted for the channel.

In an embodiment, that the numerology adopted for the first channel is different from the numerology adopted for the second channel includes at least one of the following: a subcarrier spacing adopted for the first channel is different from a subcarrier spacing adopted for the second channel, or a cyclic prefix adopted for the first channel is different from a cyclic prefix adopted for the second channel.

In an embodiment, the first channel and the second channel are the same type of channel.

In an embodiment, the second device determines a second resource set based on the first resource set, and the second device determines, from the second resource set, the second resource for the transmission of the second channel between the second device and the first device.

In an embodiment, the second device transmits second information to the first device for the first device to determine the first resource form the first resource set.

In an embodiment, the second resource set is determined based on the first resource set in one of the following manners that: a subset of the first resource set is determined as the second resource set; a resource is added into the first resource set to form the second resource set; the number of resources or a granularity of resources in the first resource set is extended or reduced in at least one of a time domain or a frequency domain to form the second resource set; or the first resource set is offset in a time domain or a frequency domain to form the second resource set.

In an embodiment, the manner in which the second resource set is determined based on the first resource set is that the subset of the first resource set is determined as the second resource set, and the method further includes the following operation.

The second device transmits third information to the first device, here, the third information is used to indicate the subset.

In an embodiment, the manner in which the second resource set is determined based on the first resource set is that the resource is added into the first resource set to form the second resource set, and the method further includes that the second device transmits fourth information to the first device, here, the fourth information is used to indicate a resource to be added.

In an embodiment, the manner in which the second resource set is determined based on the first resource set is that the number of resources or the granularity of resources in the first resource set is extended or reduced in the at least one of the time domain or the frequency domain to form the second resource set, and the method further includes the following operation.

The second device transmits fifth information to the first device, here, the fifth information is used to indicate an amplitude of extension or reduction.

In an embodiment, the manner in which the second resource set is determined based on the first resource set is that the number of resources or the granularity of resources in the first resource set is extended or reduced in the at least one of the time domain or the frequency domain to form the second resource set, and the method further includes the following operation.

An amplitude of extension or reduction is determined based on a frequency-domain magnitude relationship between a carrier where the first channel is located and a carrier where the second channel is located or based on a frequency-domain magnitude relationship between a bandwidth part where the first channel is located and a bandwidth part where the second channel is located.

In an embodiment, the manner in which the second resource set is determined based on the first resource set is that the first resource set is offset in the time domain or the frequency domain to form the second resource set, and the method further includes the following operation.

The second device transmits sixth information to the first device, here, the sixth information is used to indicate an offset.

In an embodiment, the operation that the second device determines, based on the first resource set, the first resource for the transmission of the first channel between the second device and the first device includes the following operation.

The second device determines, from the first resource set, the first resource for the transmission of the first channel.

In an embodiment, the second device transmits seventh information to the first device for the first device to determine the first resource from the first resource set.

In an embodiment, the second device determines a third resource set based on the first resource set.

The second device determines, from the third resource set, the first resource for the transmission of the first channel between the second device and the first device.

In an embodiment, the second device transmits eighth information to the first device for the first device to determine the first resource from the third resource set.

In an embodiment, the third resource set is determined based on the first resource set in one of the following manners that: a subset of the first resource set is determined as the third resource set; a resource is added into the first resource set to form the third resource set; the number of resources or a granularity of resources in the first resource set is extended or reduced in at least one of a time domain or a frequency domain to form the third resource set; or the first resource set is offset in a time domain or a frequency domain to form the third resource set.

In an embodiment, the manner in which the third resource set is determined based on the first resource set is that the subset of the first resource set is determined as the third resource set; and the second device transmits ninth information to the first device, here, the ninth information is used to indicate the subset.

In an embodiment, the manner in which the third resource set is determined based on the first resource set is that the resource is added into the first resource set to form the third resource set; and the second device transmits tenth information to the first device, here, the tenth information is used to indicate a resource to be added.

In an embodiment, the manner in which the third resource set is determined based on the first resource set is that the number of resources or the granularity of resources in the first resource set is extended or reduced in the at least one of the time domain or the frequency domain to form the third resource set; and the second device transmits eleventh information to the first device, here, the eleventh information is used to indicate an amplitude of extension or reduction.

In an embodiment, the manner in which the third resource set is determined based on the first resource set is that the number of resources or the granularity of resources in the first resource set is extended or reduce in the at least one of the time domain or the frequency domain to form the third resource set; and an amplitude of extension or reduction is determined based on a frequency-domain magnitude relationship between a carrier where the first channel is located and a carrier where the second channel is located or based on a frequency-domain magnitude relationship between a bandwidth part where the first channel is located and a bandwidth part where the second channel is located.

In an embodiment, the manner in which the third resource set is determined based on the first resource set is that the first resource set is offset in the time domain or the frequency domain to form the third resource set; and the second device transmits twelfth information to the first device, here, the twelfth information is used to indicate an offset.

The manners in which the second device determines the resource set and selects the resource from the resource set may refer to the manners in which the first device determines the resource set and selects the resource from the resource set illustrated in the method 200 and, for simplicity, elaborations are omitted herein.

Accordingly, in the embodiment of the disclosure, the second device configures the first resource set for the first device, the first device may transmit the first channel based on the first resource set, and the first device may also transmit the second channel based on the second resource set. Therefore, the problem of high signaling overhead brought by the case where the second device separately configures, for the first device, a resource set for the first channel and a resource set for the second channel may be solved, flexibility in configuration and use of resources may be achieved, and an association between transmission of the first channel and transmission of the second channel may be achieved.

FIG. 4 is a block diagram of a device 400 for wireless communication according to an embodiment of the disclosure. As illustrated in FIG. 4, the device 400 includes a communication unit 410 and a processing unit 420.

The communication unit 410 is configured to receive first information transmitted by a second device, here, the first information is used in configuring a first resource set for a first device.

The processing unit 420 is configured to determine, based on the first resource set, a first resource for transmission of a first channel between the first device and the second device and determine, based on the first resource set, a second resource for transmission of a second channel between the first device and the second device.

The device 400 for wireless communication may correspond to the first device in the method embodiments, may implement corresponding operations implemented by the first device in the method embodiments and, for simplicity, will not be elaborated herein.

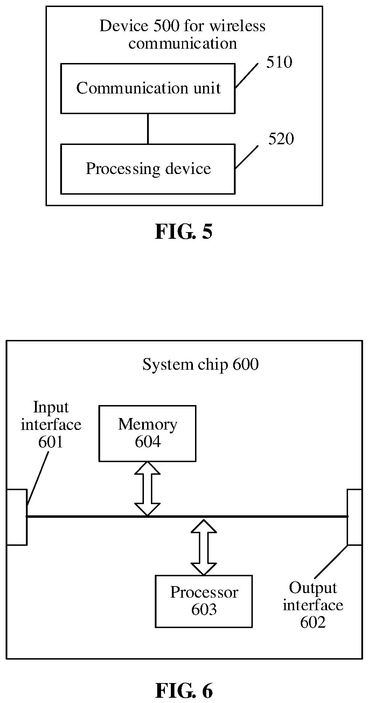

FIG. 5 is a block diagram of a device 500 for wireless communication not being part of the invention. As illustrated in FIG. 5, the network device 500 includes a communication unit 510 and a processing unit 520.

The communication unit 510 is configured to transmit first information to a first device, here, the first information is used in configuring a first resource set for the first device.

The processing unit 520 is configured to determine, based on the first resource set, a first resource for transmission of a first channel between the device and the first device and determine, based on the first resource set, a second resource for transmission of a second channel between the device and the first device.

The device 500 may correspond to the second device in the method embodiments, may implement corresponding operations implemented by the second device in the method embodiments and, for simplicity, will not be elaborated herein.

FIG. 6 is a structure diagram of a system chip 600 not being part of the invention. The system chip 600 of FIG. 6 includes an input interface 601, output interface 602, processor 603 and memory 604 which may be connected through an internal communication connection line. The processor 603 is configured to execute a code in the memory 604.

In an embodiment, when the code is executed, the processor 603 implements the method executed by the first device in the method embodiments. For simplicity, elaborations are omitted herein.

In an embodiment, when the code is executed, the processor 603 implements the method executed by the second device in the method embodiments. For simplicity, elaborations are omitted herein.

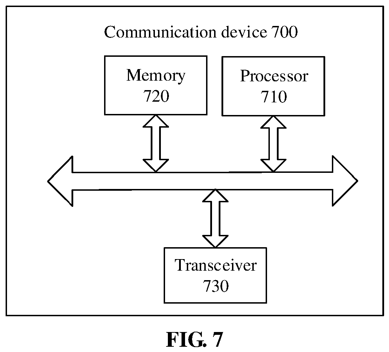

FIG. 7 is a block diagram of a communication device 700 not being part of the invention. As illustrated in FIG. 7, the communication device 700 includes a processor 710 and a memory 720. Herein, the memory 720 may store a program code, and the processor 710 may execute the program code stored in the memory 720.

In an embodiment, as illustrated in FIG. 7, the communication device 700 may include a transceiver 730, and the processor 710 may control the transceiver 730 for external communication.

In an embodiment, the processor 710 may call the program code stored in the memory 720 to execute corresponding operations of the first device in the method embodiments. For similarity, elaborations are omitted herein.

In an embodiment, the processor 710 may call the program code stored in the memory 720 to execute corresponding operations of the second device in the method embodiments. For similarity, elaborations are omitted herein.

The processor in the embodiments of the disclosure may be an integrated circuit chip and has a signal processing capability. In an implementation process, each operation of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, operation and logical block diagram disclosed in the embodiments of the disclosure may be implemented or executed. The universal processor may be a microprocessor or the processor may also be any conventional processor and the like. The operations of the methods disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory and completes the operations of the methods in combination with hardware.

The memory in the embodiments of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). The memory of a system and method described in the disclosure is intended to include, but not limited to, memories of these and any other proper types.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working process of the system, device and unit described above may refer to the corresponding processes in the method embodiments and will not be elaborated herein for convenient and brief description.

In some embodiments provided by the disclosure, the disclosed system, device and method may be implemented in another manner. For example, the device embodiments described above is only schematic, and for example, division of the units is only logic function division, and other division manners may be adopted during practical implementation. For example, multiple units or components may be combined or integrated into another system, or some characteristics may be neglected or not executed. In addition, mutual coupling or direct coupling or communication connection between displayed or discussed components may be indirect coupling or communication connection of the device or the units through some interfaces, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, or two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the related art or part of the technical solutions may be embodied in form of software product, and the computer software product is stored in a storage medium, and includes a plurality of instructions configured to enable a computer device (which may be a personal computer, a server, a network device or the like) to execute all or part of the operations of the method in each embodiment of the disclosure. The abovementioned storage medium includes various media capable of storing program codes, such as a U disk, a mobile hard disk, a ROM, a RAM, a magnetic disk or an optical disk.

## Claims

1. A method for wireless communication, in a New Radio, NR, system, comprising:
receiving (210), by a terminal device, first information transmitted by a base station device, wherein the first information is used in configuring a first resource set for the terminal device;
determining (220), by the terminal device, based on the first resource set, a first resource for transmission of a first channel between the terminal device and the base station device; **characterized by** further comprising:
determining (230), by the terminal device, a second resource set based on the first resource set in one of the following manners that:
(a) a resource is added into the first resource set to form the second resource set;
(b) a number of resources in the first resource set is extended or reduced in at least one of a time domain or a frequency domain to form the second resource set;
(c) a granularity of resources in the first resource set is extended or reduced in at least one of a time domain or a frequency domain to form the second resource set comprising resources with an extended or reduced granularity, or
(d) the first resource set is offset in a time domain or a frequency domain to form the second resource set; and
determining (230), by the terminal device, from the second resource set, a second resource for transmission of a second channel between the terminal device and the base station device,
wherein the first channel and the second channel are one of the following:
(a) the first channel is a first Physical Uplink Shared Channel, PUSCH, and the second channel is a second PUSCH;
(b) the first channel is a first Physical Uplink Control Channel, PUCCH, and the second channel is a second PUCCH; or
(c) the first channel is a first Physical Downlink Shared Channel, PDSCH, and the second channel is a second PDSCH.

2. The method of claim 1, wherein the first channel is different from the second channel in terms of at least one of:
a bandwidth part where the channel is located, a carrier where the channel is located, a cell where the channel is located, a duplex direction adopted for the channel, or a numerology adopted for the channel.

3. The method of claim 2, wherein the numerology adopted for the first channel is different from the numerology adopted for the second channel comprises at least one of: a subcarrier spacing adopted for the first channel is different from a subcarrier spacing adopted for the second channel, or a cyclic prefix adopted for the first channel is different from a cyclic prefix adopted for the second channel.

4. The method of any one of claims 1-3, wherein the manner in which the second resource set is determined based on the first resource set comprises that the resource is added into the first resource set to form the second resource set; and the method further comprises:
receiving, by the terminal device, fourth information from the base station device, wherein the fourth information is used to indicate a resource to be added.

5. The method of any one of claims 1-3, wherein the manner in which the second resource set is determined based on the first resource set comprises that the number of resources in the first resource set is extended or reduced in the at least one of the time domain or the frequency domain to form the second resource set, or the granularity of resources in the first resource set is extended or reduced in the at least one of the time domain or the frequency domain to form the second resource set comprising the resources with the extended or reduced granularity; and
the method further comprises:
receiving, by the terminal device, fifth information from the base station device, wherein the fifth information is used to indicate an amplitude of extension or reduction.

6. The method of any one of claims 1-3, wherein the manner in which the second resource set is determined based on the first resource set comprises that the number of resources in the first resource set is extended or reduced in the at least one of the time domain or the frequency domain to form the second resource set, or the granularity of resources in the first resource set is extended or reduced in the at least one of the time domain or the frequency domain to form the second resource set comprising the resources with the extended or reduced granularity; and
the method further comprises:
determining an amplitude of extension or reduction based on a frequency-domain magnitude relationship between a carrier where the first channel is located and a carrier where the second channel is located or based on a frequency-domain magnitude relationship between a bandwidth part where the first channel is located and a bandwidth part where the second channel is located.

7. The method of any one of claims 1-3, wherein the manner in which the second resource set is determined based on the first resource set comprises that the first resource set is offset in the time domain or the frequency domain to form the second resource set; and
the method further comprises:
receiving, by the terminal device, sixth information from the base station device, wherein the sixth information is used to indicate an offset.

8. The method of any one of claims 1-7, wherein determining, by the terminal device, the first resource for the transmission of the first channel between the terminal device and the base station device based on the first resource set comprises:
determining, by the terminal device, a third resource set based on the first resource set; and
determining, by the terminal device, from the third resource set, the first resource for the transmission of the first channel between the terminal device and the base station device.

9. The method of claim 8, wherein determining, by the terminal device, the third resource set based on the first resource set comprises:
determining the third resource set based on the first resource set in one of the following manners that:
a subset of the first resource set is determined as the third resource set;
a resource is added into the first resource set to form the third resource set;
a number of resources in the first resource set is extended or reduced in at least one of a time domain or a frequency domain to form the third resource set;
a granularity of resources in the first resource set is extended or reduced in at least one of a time domain or a frequency domain to form the second resource set comprising resources with an extended or reduced granularity; or
the first resource set is offset in a time domain or a frequency domain to form the third resource set.

10. The method of claim 9, wherein the manner in which the third resource set is determined based on the first resource set comprises that the subset of the first resource set is determined as the third resource set; and
the method further comprises:
receiving, by the terminal device, ninth information from the base station device, wherein the ninth information is used to indicate the subset.

11. The method of claim 9, wherein the manner in which the third resource set is determined based on the first resource set comprises that the resource is added into the first resource set to form the third resource set; and
the method further comprises:
receiving, by the terminal device, tenth information from the base station device, wherein the tenth information is used to indicate a resource to be added.

12. The method of claim 9, wherein the manner in which the third resource set is determined based on the first resource set comprises that the number of resources in the first resource set is extended or reduced in the at least one of the time domain or the frequency domain to form the third resource set, or the granularity of resources in the first resource set is extended or reduced in the at least one of the time domain or the frequency domain to form the second resource set comprising the resources with the extended or reduced granularity; and
the method further comprises:
receiving, by the terminal device, eleventh information from the base station device, wherein the eleventh information is used to indicate an amplitude of extension or reduction.
or,
the method further comprises:
determining an amplitude of extension or reduction based on a frequency-domain magnitude relationship between a carrier where the first channel is located and a carrier where the second channel is located or based on a frequency-domain magnitude relationship between a bandwidth part where the first channel is located and a bandwidth part where the second channel.

13. The method of claim 9, wherein the manner in which the third resource set is determined based on the first resource set comprises that the first resource set is offset in the time domain or the frequency domain to form the third resource set; and
the method further comprises:
receiving, by the terminal device, twelfth information from the base station device, wherein the twelfth information is used to indicate an offset.

14. A terminal device for wireless communication, in a New Radio, NR, system, comprising means adapted to perform the method according to any one of claims 1-13.

## Patentansprüche

1. Verfahren für Drahtloskommunikation in einem New Radio(NR)-System, das Folgendes umfasst:
Empfangen (210), durch ein Endgerät, einer ersten Information, die von einer Basisstationsvorrichtung übertragen wird, wobei die erste Information beim Konfigurieren eines ersten Ressourcensatzes für das Endgerät verwendet wird;
Bestimmen (220), durch das Endgerät, auf der Basis des ersten Ressourcensatzes, einer ersten Ressource für die Übertragung eines ersten Kanals zwischen dem Endgerät und der Basisstationsvorrichtung;
**dadurch gekennzeichnet, dass** es ferner Folgendes umfasst:
Bestimmen (230), durch das Endgerät, eines zweiten Ressourcensatzes auf der Basis des ersten Ressourcensatzes in einer der folgenden Weisen, dass:
(a) eine Ressource dem ersten Ressourcensatz hinzugefügt wird, um den zweiten Ressourcensatz zu bilden;
(b) eine Anzahl von Ressourcen im ersten Ressourcensatz in mindestens einem eines Zeitbereichs oder eines Frequenzbereichs erweitert oder reduziert wird, um den zweiten Ressourcensatz zu bilden;
(c) eine Granularität von Ressourcen im ersten Ressourcensatz in mindestens einem eines Zeitbereichs oder eines Frequenzbereichs erweitert oder reduziert wird, um den zweiten Ressourcensatz zu bilden, der Ressourcen mit einer erweiterten oder reduzierten Granularität umfasst, oder
(d) der erste Ressourcensatz in einem Zeitbereich oder einem Frequenzbereich versetzt wird, um den zweiten Ressourcensatz zu bilden; und
Bestimmen (230), durch das Endgerät, von dem zweiten Ressourcensatz, einer zweiten Ressource für die Übertragung eines zweiten Kanals zwischen dem Endgerät und der Basisstationsvorrichtung,
wobei der erste Kanal und der zweite Kanal einer der folgenden sind:
(a) der erste Kanal ist ein erster gemeinsam genutzter physikalischer Uplink-Kanal (PUSCH), und der zweite Kanal ist ein zweiter PUSCH;
(b) der erste Kanal ist ein erster physikalischer Uplink-Steuerkanal (PUCCH), und der zweite Kanal ist ein zweiter PUCCH; oder
(c) der erste Kanal ist ein erster gemeinsam genutzter physikalischer Downlink-Kanal (PDSCH), und der zweite Kanal ist ein zweiter PDSCH.

2. Verfahren nach Anspruch 1, wobei sich der erste Kanal von dem zweiten Kanal durch mindestens eines der folgenden Merkmale unterscheidet:
einen Bandbreitenteil, in dem sich der Kanal befindet, einen Träger, in dem sich der Kanal befindet, eine Zelle, in der sich der Kanal befindet, eine für den Kanal angenommene Duplexrichtung oder eine für den Kanal angenommene Numerologie.

3. Verfahren nach Anspruch 2, wobei sich die für den ersten Kanal angenommene Numerologie von der für den zweiten Kanal angenommenen Numerologie unterscheidet mindestens eines der folgenden Elemente umfasst: ein für den ersten Kanal angenommener Unterträgerabstand unterscheidet sich von einem für den zweiten Kanal angenommenen Unterträgerabstand, oder ein für den ersten Kanal angenommenes zyklisches Präfix unterscheidet sich von einem für den zweiten Kanal angenommenen zyklischen Präfix.

4. Verfahren nach einem der Ansprüche 1 bis 3, wobei die Art und Weise, in der der zweite Ressourcensatz auf der Basis des ersten Ressourcensatzes bestimmt wird, umfasst, dass die Ressource zum ersten Ressourcensatz hinzugefügt wird, um den zweiten Ressourcensatz zu bilden; und
das Verfahren ferner Folgendes umfasst:
Empfangen, durch das Endgerät, einer vierten Information von der Basisstationsvorrichtung, wobei die vierte Information verwendet wird, um eine hinzuzufügende Ressource anzugeben.

5. Verfahren nach einem der Ansprüche 1-3, wobei die Art und Weise, in der der zweite Ressourcensatz auf der Basis des ersten Ressourcensatzes bestimmt wird, umfasst, dass die Anzahl der Ressourcen im ersten Ressourcensatz in mindestens einem des Zeitbereichs oder des Frequenzbereichs erweitert oder reduziert wird, um den zweiten Ressourcensatz zu bilden, oder die Granularität der Ressourcen im ersten Ressourcensatz in mindestens einem des Zeitbereichs oder des Frequenzbereichs erweitert oder reduziert wird, um den zweiten Ressourcensatz zu bilden, der die Ressourcen mit der erweiterten oder reduzierten Granularität umfasst; und
das Verfahren ferner Folgendes umfasst:
Empfangen, durch das Endgerät, einer fünften Information von der Basisstationsvorrichtung, wobei die fünfte Information verwendet wird, um eine Amplitude der Erweiterung oder Reduzierung anzuzeigen.

6. Verfahren nach einem der Ansprüche 1-3, wobei die Art und Weise, in der der zweite Ressourcensatz auf der Basis des ersten Ressourcensatzes bestimmt wird, umfasst, dass die Anzahl der Ressourcen im ersten Ressourcensatz in mindestens einem des Zeitbereichs oder des Frequenzbereichs erweitert oder reduziert wird, um den zweiten Ressourcensatz zu bilden, oder die Granularität der Ressourcen im ersten Ressourcensatz in mindestens einem des Zeitbereichs oder des Frequenzbereichs erweitert oder reduziert wird, um den zweiten Ressourcensatz zu bilden, der die Ressourcen mit der erweiterten oder reduzierten Granularität umfasst; und
das Verfahren ferner Folgendes umfasst:
Bestimmen einer Amplitude der Erweiterung oder Reduzierung auf der Basis einer Größenbeziehung im Frequenzbereich zwischen einem Träger, auf dem sich der erste Kanal befindet, und einem Träger, auf dem sich der zweite Kanal befindet, oder auf der Basis einer Größenbeziehung im Frequenzbereich zwischen einem Bandbreitenteil, auf dem sich der erste Kanal befindet, und einem Bandbreitenteil, auf dem sich der zweite Kanal befindet.

7. Verfahren nach einem der Ansprüche 1-3, wobei die Art und Weise, in der der zweite Ressourcensatz auf der Basis des ersten Ressourcensatzes bestimmt wird, umfasst, dass erste die Ressource im Zeitbereich oder Frequenzbereich versetzt wird, um den zweiten Ressourcensatz zu bilden; und
das Verfahren ferner Folgendes umfasst:
Empfangen, durch das Endgerät, einer sechsten Information von der Basisstationsvorrichtung, wobei die sechste Information verwendet wird, um einen Versatz anzugeben.

8. Verfahren nach einem der Ansprüche 1-7, wobei das Bestimmen, durch das Endgerät, der ersten Ressource für die Übertragung des ersten Kanals zwischen dem Endgerät und der Basisstationsvorrichtung auf der Basis des ersten Ressourcensatzes Folgendes umfasst:
Bestimmen, durch das Endgerät, eines dritten Ressourcensatzes auf der Basis des ersten Ressourcensatzes; und
Bestimmen, durch das Endgerät, von dem dritten Ressourcensatz, der ersten Ressource für die Übertragung des ersten Kanals zwischen dem Endgerät und der Basisstationsvorrichtung.

9. Verfahren nach Anspruch 8, wobei das Bestimmen, durch das Endgerät, des dritten Ressourcensatzes auf der Basis des ersten Ressourcensatzes Folgendes umfasst:
Bestimmen des dritten Ressourcensatzes auf der Basis des ersten Ressourcensatzes in einer der folgenden Weisen, dass:
ein Teilsatz des ersten Ressourcensatzes als der dritte Ressourcensatz bestimmt wird;
eine Ressource dem ersten Ressourcensatz hinzugefügt wird, um den dritten Ressourcensatz zu bilden;
eine Anzahl von Ressourcen im ersten Ressourcensatz in mindestens einem eines Zeitbereichs oder eines Frequenzbereichs erweitert oder reduziert wird, um den dritten Ressourcensatz zu bilden;
eine Granularität von Ressourcen im ersten Ressourcensatz in mindestens einem eines Zeitbereichs oder eines Frequenzbereichs erweitert oder reduziert wird, um den zweiten Ressourcensatz zu bilden, der Ressourcen mit einer erweiterten oder reduzierten Granularität umfasst; oder
der erste Ressourcensatz in einem Zeitbereich oder einem Frequenzbereich versetzt wird, um den dritten Ressourcensatz zu bilden.

10. Verfahren nach Anspruch 9, wobei die Art und Weise, in der der dritte Ressourcensatz auf der Basis des ersten Ressourcensatzes bestimmt wird, umfasst, dass der Teilsatz des ersten Ressourcensatzes als der dritte Ressourcensatz bestimmt wird; und
das Verfahren ferner Folgendes umfasst:
Empfangen, durch das Endgerät, einer neunten Information von der Basisstationsvorrichtung, wobei die neunte Information verwendet wird, um den Teilsatz anzugeben.

11. Verfahren nach Anspruch 9, wobei die Art und Weise, in der der dritte Ressourcensatz auf der Basis des ersten Ressourcensatzes bestimmt wird, umfasst, dass die Ressource zu dem ersten Ressourcensatz hinzugefügt wird, um den dritten Ressourcensatz zu bilden; und
das Verfahren ferner Folgendes umfasst:
Empfangen, durch das Endgerät, einer zehnten Information von der Basisstationsvorrichtung, wobei die zehnte Information verwendet wird, um eine hinzuzufügende Ressource anzugeben.

12. Verfahren nach Anspruch 9, wobei die Art und Weise, in der der dritte Ressourcensatz auf der Basis des ersten Ressourcensatzes bestimmt wird, umfasst, dass die Anzahl der Ressourcen im ersten Ressourcensatz in mindestens einem des Zeitbereichs oder des Frequenzbereichs erweitert oder reduziert wird, um den dritten Ressourcensatz zu bilden, oder die Granularität der Ressourcen in dem ersten Ressourcensatz in mindestens einem des Zeitbereichs oder des Frequenzbereichs erweitert oder reduziert wird, um den zweiten Ressourcensatz zu bilden, der die Ressourcen mit der erweiterten oder reduzierten Granularität umfasst; und
das Verfahren ferner Folgendes umfasst:
Empfangen, durch das Endgerät, einer elften Information von der Basisstationsvorrichtung, wobei die elfte Information verwendet wird, um eine Amplitude der Erweiterung oder Reduzierung anzugeben, oder
das Verfahren ferner Folgendes umfasst:
Bestimmen einer Amplitude der Erweiterung oder Reduzierung auf der Basis einer Größenbeziehung im Frequenzbereich zwischen einem Träger, auf dem sich der erste Kanal befindet, und einem Träger, auf dem sich der zweite Kanal befindet, oder auf der Basis einer Größenbeziehung im Frequenzbereich zwischen einem Bandbreitenteil, auf dem sich der erste Kanal befindet, und einem Bandbreitenteil, auf dem sich der zweite Kanal befindet.

13. Verfahren nach Anspruch 9, wobei die Art und Weise, in der der dritte Ressourcensatz auf der Basis des ersten Ressourcensatzes bestimmt wird, umfasst, dass erste die Ressource im Zeitbereich oder Frequenzbereich versetzt wird, um den dritten Ressourcensatz zu bilden; und
das Verfahren ferner Folgendes umfasst:
Empfangen, durch das Endgerät, einer zwölften Information von der Basisstationsvorrichtung, wobei die zwölfte Information verwendet wird, um einen Versatz anzugeben.

14. Endgerät für Drahtloskommunikation in einem New Radio(NR)-System, das Mittel umfasst, die dazu ausgebildet sind, das Verfahren gemäß einem der Ansprüche 1-13 durchzuführen.

## Revendications

1. Procédé pour une communication sans fil, dans un système New Radio, NR, comprenant :
la réception (210), par un dispositif terminal, de premières informations émises par un dispositif de station de base, les premières informations étant utilisées dans la configuration d'un premier ensemble de ressources pour le dispositif terminal ;
la détermination (220), par le dispositif terminal, sur la base du premier ensemble de ressources, d'une première ressource pour une émission d'un premier canal entre le dispositif terminal et le dispositif de station de base ;
**caractérisé en ce qu'**il comprend en outre :
la détermination (230), par le dispositif terminal, d'un deuxième ensemble de ressources sur la base du premier ensemble de ressources d'une des manières suivantes selon laquelle :
(a) une ressource est ajoutée dans le premier ensemble de ressources afin de former le deuxième ensemble de ressources ;
(b) un nombre de ressources dans le premier ensemble de ressources est étendu ou réduit dans un domaine temporel et/ou un domaine fréquentiel afin de former le deuxième ensemble de ressources ;
(c) une granularité de ressources dans le premier ensemble de ressources est étendue ou réduite dans un domaine temporel et/ou un domaine fréquentiel afin de former le deuxième ensemble de ressources comprenant des ressources ayant une granularité étendue ou réduite, ou
(d) le premier ensemble de ressources est décalé dans un domaine temporel ou un domaine fréquentiel afin de former le deuxième ensemble de ressources ; et
la détermination (230), par le dispositif terminal, à partir du deuxième ensemble de ressources, d'une deuxième ressource pour une émission d'un second canal entre le dispositif terminal et le dispositif de station de base,
dans lequel le premier canal et le second canal sont un des éléments suivants :
(a) le premier canal est un premier canal physique partagé montant, PUSCH, et le second canal est un second PUSCH ;
(b) le premier canal est un premier canal physique de contrôle de liaison montante, PUCCH, et le second canal est un second PUCCH ; ou
(c) le premier canal est un premier canal physique partagé descendant, PDSCH, et le second canal est un second PDSCH.

2. Procédé selon la revendication 1, dans lequel le premier canal est différent du second canal en termes d'au moins un parmi :
une partie de largeur de bande où se situe le canal, une porteuse où se situe le canal, une cellule où se situe le canal, une direction duplex adoptée pour le canal ou une numérologie adoptée pour le canal.

3. Procédé selon la revendication 2, dans lequel la numérologie adoptée pour le premier canal est différente de la numérologie adoptée pour le second canal comprend au moins un parmi : un espacement de sous-porteuse adopté pour le premier canal est différent d'un espacement de sous-porteuse adopté pour le second canal, ou un préfixe cyclique adopté pour le premier canal est différent d'un préfixe cyclique adopté pour le second canal.

4. Procédé selon l'une quelconque des revendications 1 à 3, dans lequel la manière avec laquelle le deuxième ensemble de ressources est déterminé sur la base du premier ensemble de ressources comprend le fait que la ressource est ajoutée dans le premier ensemble de ressources afin de former le deuxième ensemble de ressources ; et
le procédé comprend en outre :
la réception, par le dispositif terminal, de quatrièmes informations en provenance du dispositif de la station de base, les quatrièmes informations étant utilisées pour indiquer une ressource à ajouter.

5. Procédé selon l'une quelconque des revendications 1 à 3, dans lequel la manière avec laquelle le deuxième ensemble de ressources est déterminé sur la base du premier ensemble de ressources comprend le fait que le nombre de ressources dans le premier ensemble de ressources est étendu ou réduit dans le domaine temporel et/ou le domaine fréquentiel afin de former le deuxième ensemble de ressources, ou la granularité de ressources dans le premier ensemble de ressources est étendue ou réduite dans le domaine temporel et/ou le domaine fréquentiel afin de former le deuxième ensemble de ressources comprenant les ressources ayant la granularité étendue ou réduite ; et
le procédé comprend en outre :
la réception, par le dispositif terminal, de cinquièmes informations en provenance du dispositif de la station de base, les cinquièmes informations étant utilisées pour indiquer une amplitude d'extension ou de réduction.

6. Procédé selon l'une quelconque des revendications 1 à 3, dans lequel la manière avec laquelle le deuxième ensemble de ressources est déterminé sur la base du premier ensemble de ressources comprend le fait que le nombre de ressources dans le premier ensemble de ressources est étendu ou réduit dans le domaine temporel et/ou le domaine fréquentiel afin de former le deuxième ensemble de ressources, ou la granularité de ressources dans le premier ensemble de ressources est étendue ou réduite dans le domaine temporel et/ou le domaine fréquentiel afin de former le deuxième ensemble de ressources comprenant les ressources ayant la granularité étendue ou réduite ; et
le procédé comprend en outre :
la détermination d'une amplitude d'extension ou de réduction sur la base d'une relation de grandeur de domaine fréquentiel entre une porteuse où se situe le premier canal et une porteuse où se situe le second canal ou sur la base d'une relation de grandeur de domaine fréquentiel entre une partie de largeur de bande où se situe le premier canal et une partie de largeur de bande où se situe le second canal.

7. Procédé selon l'une quelconque des revendications 1 à 3, dans lequel la manière avec laquelle le deuxième ensemble de ressources est déterminé sur la base du premier ensemble de ressources comprend le fait que le premier ensemble de ressources est décalé dans le domaine temporel ou le domaine fréquentiel afin de former le deuxième ensemble de ressources ; et
le procédé comprend en outre :
la réception, par le dispositif terminal, de sixièmes informations en provenance du dispositif de la station de base, les sixièmes informations étant utilisées pour indiquer un décalage.

8. Procédé selon l'une quelconque des revendications 1 à 7, dans lequel la détermination, par le dispositif terminal, de la première ressource pour l'émission du premier canal entre le dispositif terminal et le dispositif de station de base sur la base du premier ensemble de ressources comprend :
la détermination, par le dispositif terminal, d'un troisième ensemble de ressources sur la base du premier ensemble de ressources ; et
la détermination, par le dispositif terminal, à partir du troisième ensemble de ressources, de la première ressource pour l'émission du premier canal entre le dispositif terminal et le dispositif de station de base.

9. Procédé selon la revendication 8, dans lequel la détermination, par le dispositif terminal, du troisième ensemble de ressources sur la base du premier ensemble de ressources comprend :
la détermination du troisième ensemble de ressources sur la base du premier ensemble de ressources d'une des manières suivantes selon lesquelles :
un sous-ensemble du premier ensemble de ressources est déterminé en tant que troisième ensemble de ressources ;
une ressource est ajoutée dans le premier ensemble de ressources afin de former le troisième ensemble de ressources ;
un nombre de ressources dans le premier ensemble de ressources est étendu ou réduit dans un domaine temporel et/ou un domaine fréquentiel afin de former le troisième ensemble de ressources ;
une granularité de ressources dans le premier ensemble de ressources est étendue ou réduite dans un domaine temporel et/ou un domaine fréquentiel afin de former le deuxième ensemble de ressources comprenant des ressources ayant une granularité étendue ou réduite ; ou
le premier ensemble de ressources est décalé dans un domaine temporel ou un domaine fréquentiel afin de former le troisième ensemble de ressources.

10. Procédé selon la revendication 9, dans lequel la manière avec laquelle le troisième ensemble de ressources est déterminé sur la base du premier ensemble de ressources comprend le fait que le sous-ensemble du premier ensemble de ressources est déterminé en tant que troisième ensemble de ressources ; et
le procédé comprend en outre :
la réception, par le dispositif terminal, de neuvièmes informations en provenance du dispositif de station de base, les neuvièmes informations étant utilisées pour indiquer le sous-ensemble.

11. Procédé selon la revendication 9, dans lequel la manière avec laquelle le troisième ensemble de ressources est déterminé sur la base du premier ensemble de ressources comprend le fait que la ressource est ajoutée dans le premier ensemble de ressources afin de former le troisième ensemble de ressources ; et
le procédé comprend en outre :
la réception, par le dispositif terminal, de dixièmes informations en provenance du dispositif de station de base, les dixièmes informations étant utilisées pour indiquer une ressource à ajouter.

12. Procédé selon la revendication 9, dans lequel la manière avec laquelle le troisième ensemble de ressources est déterminé sur la base du premier ensemble de ressources comprend le fait que le nombre de ressources dans le premier ensemble de ressources est étendu ou réduit dans le domaine temporel et/ou le domaine fréquentiel afin de former le troisième ensemble de ressources, ou la granularité de ressources dans le premier ensemble de ressources est étendue ou réduite dans le domaine temporel et/ou le domaine fréquentiel afin de former le deuxième ensemble de ressources comprenant les ressources ayant la granularité étendue ou réduite ; et
le procédé comprend en outre :
la réception, par le dispositif terminal, de onzièmes informations en provenance du dispositif de station de base, les onzièmes informations étant utilisées pour indiquer une amplitude d'extension ou de réduction,
ou,
le procédé comprend en outre :
la détermination d'une amplitude d'extension ou de réduction sur la base d'une relation de grandeur de domaine fréquentiel entre une porteuse où se situe le premier canal et une porteuse où se situe le second canal ou sur la base d'une relation de grandeur de domaine fréquentiel entre une partie de largeur de bande où se situe le premier canal et une partie de largeur de bande où se situe le second canal.

13. Procédé selon la revendication 9, dans lequel la manière avec laquelle le troisième ensemble de ressources est déterminé sur la base du premier ensemble de ressources comprend le fait que le premier ensemble de ressources est décalé dans le domaine temporel ou le domaine fréquentiel afin de former le troisième ensemble de ressources ; et
le procédé comprend en outre :
la réception, par le dispositif terminal, de douzièmes informations en provenance du dispositif de station de base, les douzièmes informations étant utilisées pour indiquer un décalage.

14. Dispositif terminal pour une communication sans fil, dans un système New Radio, NR, comprenant des moyens conçus pour exécuter le procédé selon l'une quelconque des revendications 1 à 13.
